# EUROPÄISCHE PATENTSCHRIFT

(11) **EP 0 736 414 B1**
(45) Veröffentlichungstag und Bekanntmachung des Hinweises auf die Patenterteilung: **27.06.2001**
(21) Anmeldenummer: 96101879.3
(22) Anmeldetag: 09.02.1996
(51) Int. Cl.: B60Q 1/52, G01S 13/93, G05D 1/03

(54) **Fahrzeug mit optischer Abtasteinrichtung für einen seitlichen Fahrbahnbereich**
Vehicle optical device for scanning the side lanes field
Dispositif d'exploration optique des voies de circulation adjacents pour véhicule automobile

(30) Priorität: 07.03.1995 DE 19507957
(43) Veröffentlichungstag der Anmeldung: 09.10.1996
(73) Patentinhaber: DaimlerChrysler AG, 70567 Stuttgart (DE)
(72) Erfinder: Dobler, Günter, D-73776 Altbach (DE); Rothe, Siegfried, D-73770 Denkendorf (DE); Betzitza, Peter, D-71063 Sindelfingen (DE); Hartlieb, Markus, D-72141 Waldorfhäslach (DE)

(56) Entgegenhaltungen:
- EP-A- 0 049 722
- DE-A- 3 240 498
- DE-A- 4 110 132
- FR-A- 2 679 357
- US-A- 3 214 593
- US-A- 3 708 668
- US-A- 4 630 109
- US-A- 4 970 653
- US-A- 5 314 037

## Beschreibung

Die Erfindung bezieht sich auf ein Fahrzeug mit einer seitlich angebrachten optischen Abtasteinrichtung zur berührungslosen Abtastung eines seitlichen Fahrbahnbereichs mit nachgeschalteter Auswerteeinheit. Berührungslose, an Fahrzeugseitenbereichen angeordnete Abtastsysteme sind bereits in vielerlei Formen bekannt und dienen vor allem zur Hinderniserkennung, Abstandswarnung, Rückraumüberwachung und/oder Fahrbahnmarkierungserkennung. Die letztere Funktion wird ihrerseits beispielsweise zur automatischen Spurhaltung des Fahrzeugs oder in einem Einschlafwarnsystem genutzt, wobei letzteres beim Erkennen eines drohenden Verlassens der Fahrspur durch das Fahrzeug eine optische, akustische und/oder haptische Warnmeldung erzeugt.

So wird in der Patentschrift US 4.970.653 ein Fahrzeug mit einem optischen Abtastsystem beschrieben, das eine herkömmliche CCD-Kamera umfaßt, die den Fahrzeugbereich vor dem Fahrzeug, d.h. die momentane Fahrspur einschließlich der seitlichen Fahrspurmarkierungen erfaßt. Eine nachgeschaltete Auswerteeinheit, die einen Bildverarbeitungsrechner enthält, wertet das Bild hinsichtlich der Lage der seitlichen Fahrspurmarkierungen sowie eventueller Hindernisse in der Fahrspur nahe vor dem Fahrzeug aus und erzeugt entsprechende Warnmeldungen, wenn ein Hindernis erkannt wird oder das Überschreiten einer Fahrspurmarkierung droht. Die Funktion der Fahrspurmarkierungserkennung kann des weiteren dazu dienen, die Hinderniserkennung auf den Bereich zwischen den Markierungen der befahrenen Fahrspur zu begrenzen oder das Fahrzeug selbsttätig auf der momentanen Fahrspur zu halten.

Aus der Offenlegungsschrift DE 33 00 086 A1 ist es bekannt, ein Kraftfahrzeug im vorderen Seitenbereich mit einer optischen Abtasteinrichtung auszurüsten, bei der lichtempfindliche Sensoren den direkt unter ihnen liegenden Fahrbahnbereich abtasten, der gegebenenfalls durch eine am Fahrzeug angebrachte, nach unten abstrahlende Lichtquelle beleuchtet sein kann. Zwecks Warnung des Fahrers bei unkontrollierter Fahrweise gibt diese bekannte Einrichtung ein Warnsignal dann ab, wenn das Fahrzeug eine seitliche Begrenzungsmarkierung der befahrenen Fahrspur überfährt und daher die optische Abtasteinrichtung eine solche Begrenzungsmarkierung detektiert.

In der Offenlegungsschrift DE 38 27 729 A1 ist eine Kollisionswarneinrichtung für Kraftfahrzeuge offenbart, die eine Abstandsmeßeinrichtung zur berührungslosen Abstands- und Lageerkennung für einen Gegenstand im Fahrbereich des Kraftfahrzeugs beinhaltet und die bei erkannter Kollisionsgefahr ein akustisches und/oder optisches Warnsignal abgibt. Die Kollisionswarneinrichtung beinhaltet beispielsweise jeweils eine Abtasteinrichtung an der vorderen rechten und an der hinteren linken Fahrzeugecke, wobei jede Abtasteinrichtung je eine Ultraschall-Sensoreinheit und eine Infrarot-Sensoreinheit umfasst. Die Ultraschall-Sensoreinheiten erfassen jeweils einen Winkelbereich von 270° und dienen der Entfernungsbestimmung mittels der Puls-Echo-Methode. Von der jeweiligen Infrarot-Sensoreinheit wird ein schmaler Infrarotstrahl erzeugt, der schrittweise über den entsprechenden 270°-Winkelbereich verschwenkt wird und der Hinderniserkennung dient.

In der Offenlegungsschrift, die als nächsliegender Stand der Technik angesehen wird, EP 0 049 722 A1 ist ein Fahrzeug mit zwei optischen Abtasteinrichtungen beschrieben, die an den beiden vorderen Fahrzeugseitenbereichen angeordnet sind und jeweils ein Infrarot-Sendeelement und ein zugehöriges Empfangselement beinhalten. Eine an die beiden Abtasteinrichtungen angeschlossene Auswerteeinheit ist so ausgelegt, dass sie den Unterschied zwischen den beiden Signalen der Empfangselemente erkennt, wenn die eine Abtasteinrichtung einen entlang einer Fahrbahn verlaufenden Fahrspurstreifen abtastet, die andere Abtasteinrichtung hingegen einen normalen Fahrbahnbereich außerhalb des Streifens. Auf diese Weise soll das System ein Überschreiten eines derartigen Fahrspurstreifens, z.B. eines seitlichen Begrenzungsstreifens, unter Ausnutzung der Tatsache erkennen, dass der sich z.B. farblich von der sonstigen Fahrbahnoberfläche abhebende Fahrbahnstreifen das eingestrahlte IR-Licht anders reflektiert als die übrige Fahrbahnoberfläche.

Der Erfindung liegt als technisches Problem die Bereitstellung eines Fahrzeugs der eingangs genannten Art zurunde, bei dem die Auslegung der optischen Abtasteinrichtung eine zuverlässige Abtastung eines seitlichen Fahrbahnbereichs für unterschiedliche Funktionen wie Einschlafwarnung und automatische Spurhaltung sowie eine sich an die Art der vorliegenden Fahrspurmarkierung und/oder -begrenzung angepaßte Systemreaktion, z.B. in Form einer Warnanzeige, ermöglicht.

Dieses Problem wird durch ein Fahrzeug mit den Merkmalen des Anspruchs 1 gelöst. Dieses Fahrzeug beinhaltet als optische Abtasteinrichtung mehrere nebeneinander angeordnete Infrarot-Sendeelemente und ein zugehöriges CCD-Array sowie eine nachgeschaltete Auswerteeinheit, die sowohl für Laufzeitmessung als auch für Kontrastbestimmung und Konturenerkennung eingerichtet ist. Mit diesem System wird die Fahrbahnoberfläche abgetastet, um eine jeweilige Fahrbahnbegrenzung ermitteln zu können. Die Laufzeit- und Kontrastbestimmung erlaubt die Erkennung seitlicher Fahrspurmarkierungen und die Bestimmung des jeweiligen Fahrzeugabstands von solchen Markierungen. Dies befähigt das System zur Erfüllung einer Einschlafwarnfunktion zur Warnung vor einem drohenden Überschreiten einer seitlichen Fahrspurmarkierung und bildet außerdem die Grundlage für ein System zur automatischen Spurhaltung, mit dem das Fahrzeug selbsttätig auf einer bestimmten Fahrspur gehalten werden kann.

Besonders charakteristisch für das optische Abtastsystem ist, daß es mittels der nebeneinander angeordneten, einzelnen Infrarot-Sendeelemente, z.B. Infrarot-LEDs, zudem eine Konturenerkennung erlaubt. Dies bedeutet, daß das System die Art der seitlichen Fahrspurbegrenzung erkennen und damit unterscheiden kann, ob es sich hierbei beispielsweise lediglich um eine Strichmarkierung zu einer benachbarten Fahr- oder Standspur oder um einen Bordsteinrand oder, bei Fehlen eines befestigten Fahrbahnrandes, um eine anschließende Grasfläche etc. handelt. Diese Fähigkeit zur Konturenerkennung ermöglicht es bei drohendem Überfahren dieses Fahrspurrandes den Warnzeitpunkt in Abhängigkeit von der Art der erkannten Fahrspurbegrenzung wählen zu können, um dem Fahrer beim Abdriften des Fahrzeugs von der Fahrspur jeweils noch ausreichend Zeit und Raum zu lassen, das Fahrzeug sicher auf die Fahrbahn zurückzuführen. Die Abtasteinrichtung kann dazu insbesondere so angeordnet sein, daß ein seitlicher Streifen überwacht wird, der über die Höhe einer Fahrspurstrichmarkierung hinausgeht, um ggf. die Art eines nach außen anschließenden Fahrbahnabschlusses erkennen zu können. Durch die Ergebnisse der Laufzeit- und Kontrastmessung sowie der Konturenerkennung kann zudem eine Hinderniserkennung ortsfester oder beweglicher Hindernisse im Fahrzeugumfeld bereitgestellt werden, was besonders bei Nutzfahrzeugen gewinnbringend einsetzbar ist, die im allgemeinen große Zonen fehlender Einsehbarkeit im unmittelbaren Fahrzeugnahbereich durch den Fahrer aufweisen.

Eine Weiterbildung der Erfindung nach Anspruch 2 bietet durch die zusätzliche Erfassung der Fahrzeugquergeschwindigkeit ein besonders vorteilhaftes Einschlafwarnsystem für das Fahrzeug, indem ein Warnsignal vor einem drohenden Verlassen der Fahrspur durch das Fahrzeug in Abhängigkeit von dieser Quergeschwindigkeit, von der Fahrzeuglängsgeschwindigkeit und optional auch von der Art der erkannten Fahrspurbegrenzung abgegeben wird. Das Auslösen der Warnung kann damit besser an die jeweilige Situation angepaßt erfolgen als bei Systemen, bei denen diese Warnauslösung lediglich vom detektierten Abstand zur Fahrspurmarkierung abhängt.

Eine sehr effektive Einschlafwarnfunktion wird durch eine Weiterbildung der Erfindung nach Anspruch 3 realisiert, indem beidseitig das drohende Überschreiten einer seitlichen Fahrspurmarkierung überwacht und eine akustische Warnung jeweils auf derjenigen Fahrzeugseite abgestrahlt wird, auf der das Fahrzeug von der Fahrspur abzukommen droht. Die akustische Warnung kann beispielsweise aus einem sogenannten Nagelbandrattergeräusch bestehen, das dem Fahrer akustisch suggeriert, eine mit Nägeln oder einem Profil versehene Fahrbahnmarkierung zu überfahren.

Fahrzeuge, die gemäß Anspruch 4 weitergebildet sind, können fahrerangefordert selbsttätig auf einer jeweiligen Fahrspur gehalten werden, wozu das die seitlichen Fahrspurmarkierungen erkennende optische Abtastsystem mit seiner Auswerteeinheit an eine Regeleinrichtung gekoppelt ist, die den Fahrzeugabstand zu einer bzw. beiden seitlichen Fahrspurmarkierungen durch entsprechende selbsttätige Lenkeingriffe auf vorgegebene Werte einregelt. Diese automatische Spurhaltungsfunktion kann vom Fahrer in ähnlicher Weise aktiviert und deaktiviert werden, wie dies beispielsweise von einer herkömmlichen Tempomateinrichtung hinsichtlich selbsttätiger Fahrzeuggeschwindigkeitsregelung bekannt ist. Eine vorteilhafte Ausgestaltung nach Anspruch 5 gewährleistet, daß die automatische Spurhaltungsfunktion nur bei Vorliegen passender Fahrsituationen aktivierbar ist, z.B. nur bei Vorhandensein ausreichend sicher erkennbarer Fahrspurmarkierungen. In weiterer Ausgestaltung nach Anspruch 6 ist es hierbei günstig, die Abstandsregeleinrichtung bei erkanntem Fahrerlenkeingriff, erkanntem Überholvorgang oder erkannter Bremsbetätigung zu deaktivieren, so daß diesen Fahreraktionen automatisch Priorität eingeräumt ist.

Eine Weiterbildung der Erfindung nach Anspruch 7 ermöglicht die zusätzliche Erfüllung einer Rückraum- und/oder einer Umfeldüberwachungsfunktion durch die beidseitig angebrachten, optischen Abtasteinrichtungen mit den aneinandergereihten Infrarot-Sende-elementen, ggf. in Verbindung mit weiteren, am Fahrzeug angebrachten Abtasteinheiten.

Bevorzugte Ausführungsformen der Erfindung sind in den Zeichnungen dargestellt und werden nachfolgend beschrieben. Hierbei zeigen:
- Fig. 1: eine perspektivische Ansicht eines Kraftfahrzeugs mit in einem Außenspiegel angeordneter Infrarot-Abtasteinrichtung,
- Fig. 2: eine schematische Draufsicht auf ein Fahrzeug mit beidseitigen Infrarot-Abtasteinrichtungen zur Veranschaulichung einer automatischen Spurhaltungsfunktion,
- Fig. 3: eine blockdiagrammatische Darstellung des Systems zur automatischen Spurhaltung für das Fahrzeug von Figur 2,
- Fig. 4: eine schematische Draufsicht auf eine mehrspurige Fahrbahn zur Veranschaulichung einer Rückraumüberwachungsfunktion beidseitiger Infrarot-Abtasteinrichtungen und
- Fig. 5: eine schematische Draufsicht auf eine mehrspurige Fahrbahn zur Veranschaulichung einer Umfeldüberwachung unter Mithilfe von beidseitigen Infrarot-Abtasteinrichtungen.

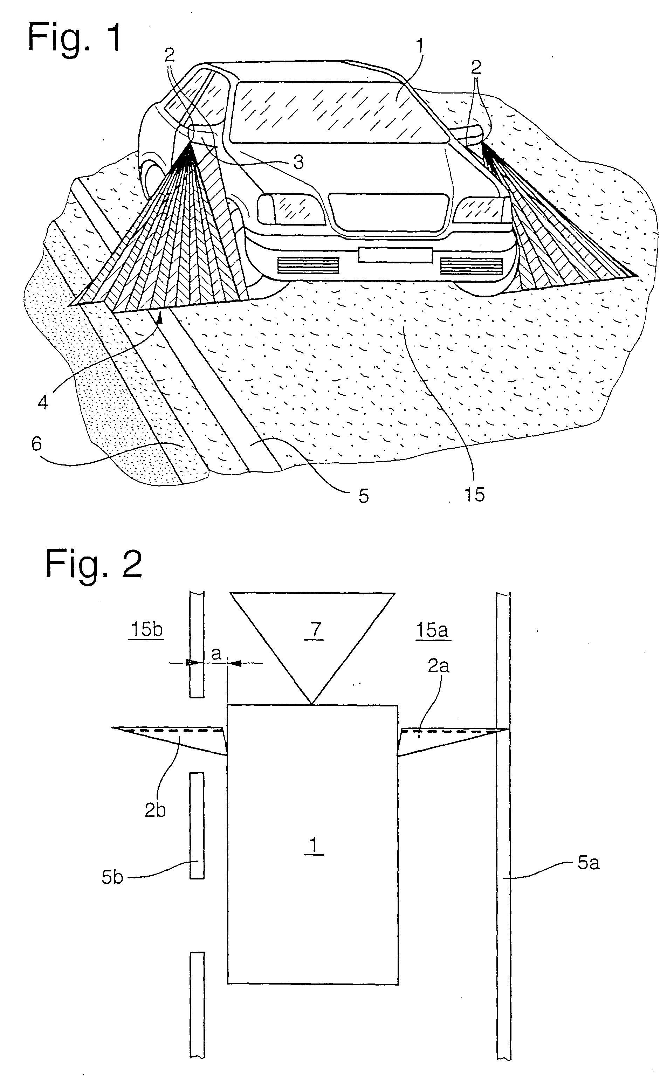

Der in Figur 1 dargestellte Personenkraftwagen (1) ist mit einer optischen Abtasteinrichtung (2) ausgerüstet, die in den rechten Außenspiegel (3) integriert ist und ein gleichmäßiges Raster von mehreren Infrarot-LEDs sowie ein zugehöriges CCD-Array beinhaltet, wie dies durch den dunklen bzw. hellen, vom rechten Außenspiegel (3) ausgehenden Abstrahlungs- bzw. Abtastbereich symbolisch wiedergegeben ist. Eine identische Abtasteinrichtung ist im linken Außenspiegel des Fahrzeugs untergebracht.

Mit den Infrarot-LEDs wird ein seitlicher Fahrbahnstreifen (4) in einer Breite von ca. 0,75m angestrahlt. Das CCD-Array besitzt einen Erfassungsbereich mit einer seitlichen Breite von ca. 1m, der den mit Infrarotlicht angestrahlten Streifen enthält. Die optische Abtasteinrichtung (2) wird durch eine in Figur 1 nicht gezeigte Auswerteeinheit zu einem Infrarot-Abtastsystem vervollständigt, das aufgrund der mehrstrahligen Infrarotlichtabtastung sowohl Laufzeitmessungen als auch Kontrastmessungen und die Erkennung von Fahrbahnrandkonturen nach dem Triangulationsprinzip ermöglicht. So läßt sich im Fall von Figur 1 beispielsweise eine gezeigte, weiße Fahrspurmarkierung (5) von diesem Abtastsystem detektieren, welche die Fahrspur (15), auf der sich das Fahrzeug (1) befindet, auf der rechten Seite begrenzt. Durch die Kontrastmessung ist es möglich, weiße und gelbe Fahrbahnmarkierungen voneinander zu unterscheiden.

Des weiteren vermag das Abtastsystem aus den Abtastsignalen unter Zuhilfenahme des Triangulationsprinzips die geometrische Kontur des abgetasteten Fahrbahnbereichs (4) zu erkennen. In Figur 1 schließt sich beispielsweise an die weiße, durchgehende Begrenzungsstrichmarkierung (5) der rechten Fahrspur (15) einer ggf. mehrspurigen Fahrbahn nach außen eine erhöhte Bordsteinkante (6) an. Aus den Sensordaten errechnet das System kontinuierlich den Abstand sowohl zur Fahrspurmarkierung (5) als auch zur Bordsteinkante (6). Des weiteren ermittelt es die Quergeschwindigkeit des Fahrzeugs und bestimmt daraus den Zeitpunkt, zu dem das Fahrzeug (1) bei Beibehaltung der momentanen Fahrweise eventuell die seitliche Fahrbahnmarkierung (5) überschreitet oder sich dieser bis auf einen Mindestabstand annähert. Sobald dieser Fall eintritt, gibt das System ein akustisches Warnsignal ab, mit dem eine nicht gezeigte Warnerzeugungseinrichtung angesteuert wird. Diese Warnerzeugungseinrichtung beinhaltet zwei jeweils seitlich im Fahrzeuginnenraum angebrachte Einheiten zur Erzeugung eines Warngeräuschs in Form eines Nagelbandratterns über entsprechende Lautsprecher. Das Geräusch wird jeweils von derjenigen Seite eingeblendet, auf der das Fahrzeug die zugehörige Fahrspurmarkierung zu überfahren droht, so daß dem Fahrer diese Information intuitiv vermittelt wird. Das Nagelbandrattern suggeriert dem Fahrer, eine mit Nägeln oder mit einem Profil versehene Fahrbahnmarkierung zu überfahren.

Für die Wahl, des Warnzeitpunktes, zu dem das solchermaßen als Einschlafwarnsystem fungierende Abtast- und Warnerzeugungssystem den Fahrer vor einem Abdriften des Fahrzeugs (1) von der Fahrspur (15) warnt, fließen außerdem die dem System zugeführte, in der Fahrzeugelektronik bereits vorhandene Information über die Fahrzeuglängsgeschwindigkeit und vor allem die Art der detektierten Fahrbahnrandkontur ein. Denn aufgrund seiner Fähigkeit zur Konturenerkennung ist es dem Abtastsystem möglich, durch entsprechende Auswertung der Sensordaten auf die Art eines außerhalb einer seitlichen Fahrspurmarkierung angrenzenden Bereiches und damit insbesondere auf dessen Befahrbarkeit zu schließen. Dies bedeutet, daß das System erkennen kann, ob sich eine weitere Fahrspur oder eine Standspur oder ein mit einer Bordsteinkante (6) befestigter Fahrbahnrand, wie im Fall von Figur 1, oder ein unbefestigter Fahrbahnrand mit einer Grasnarbe anschließt. Der Warnzeitpunkt wird nun vom System u.a. in Abhängigkeit von der detektieren Natur dieses äußeren, überwachten Fahrbahnbereichs derart gewählt, daß dem Fahrer angepaßt an die jeweilige Situation genügend Zeit und Raum bleibt, um das Fahrzeug (1) sicher auf der Fahrspur (15) halten bzw. es auf diese zurückführen zu können. So kann bei Autobahnen und Bundesstraßen mit einer Standspur beispielsweise die Warnung wesentlich später erfolgen als bei Straßen ohne Standspur.

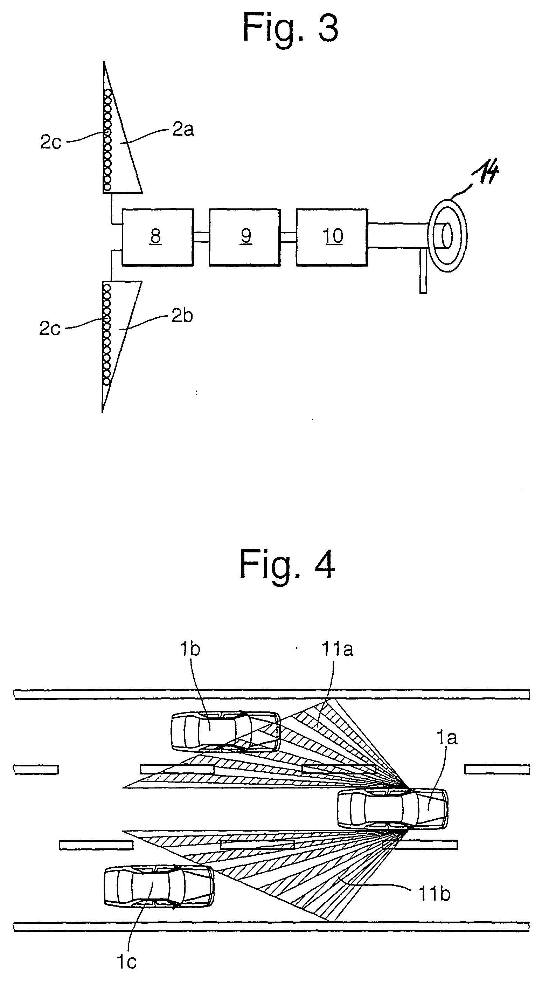

In einem weiteren Anwendungsfall wird das beschriebene Infrarot-Abtastsystem als Sensorsystem für eine Einrichtung zur automatischen Spurhaltung verwendet, wie in den Figuren 2 und 3 näher illustriert ist. Das Fahrzeug (1) besitzt dabei neben den beiden schematisch dargestellten Infrarot-Abtasteinrichtungen (2a, 2b), die in die Fahrzeugaußenspiegel integriert sind und jeweils eine Reihe von Infrarot-LEDs (2c) und ein zugehöriges CCD-Array enthalten, ein Abtastwarnsystem (7), das in Figur 2 nur symbolisch mit seinem Erfassungsbereich angedeutet und von herkömmlichem Aufbau ist. Das Fahrzeug (1) befindet sich in Figur 2 auf einer Fahrspur (15a), die rechts von einer durchgehenden, die Fahrbahn abschließenden Fahrspurmarkierung (5a) und nach links von einer durchbrochenen Fahrspurmarkierung (5b) begrenzt ist, welche die befahrene Spur (15a) von einer links anschließenden, weiteren Fahrspur (15b) trennt. Das automatische Spurhaltungssystem ist als Seitenabstandsregelung konzipiert, die auch als elektronisches Schienenführungssystem bezeichnet werden kann.

Diese Seitenabstandsregelung regelt den Abstand des Fahrzeugs (1) zu einer seitlichen Fahrbahnmarkierung, im Fall von Figur 2 zur linken Fahrspurmarkierung (5b), um einen vom Fahrer vorgebbaren Wert (a). Sie informiert den Fahrer, wie und in welchem Abstand sich sein Fahrzeug (1) zur rechten (5a) oder linken Fahrspurmarkierung (5b) bewegt und führt auf fahrerangeforderte Aktivierung hin das Fahrzeug (1) automatisch auf den gewünschten Sollabstand (a) von der jeweiligen Markierung (5b). Diese Regelungsphilosophie der Seitenabstandsregelung entspricht derjenigen herkömmlicher Tempomatregelungen zur Einhaltung einer gewünschten Fahrzeuggeschwindigkeit, indem die Regelung nur vom Benutzer aktiviert werden kann, diesen aber nicht von seiner Aufmerksamkeitspflicht entbindet. Auch der Anwendungsbereich der Seitenabstandsregelung ist demjenigen einer Tempomatregelung ähnlich, nämlich überwiegend Autobahnen und gut ausgebaute, sonstige Fernstraßen mit gut erkennbaren Fahrspurmarkierungen.

Da somit eine Kombination zwischen der Seitenabstandsregelung und einer intelligenten Tempomatregelung, welche eine frontseitige Abstandswarnung bzw. Abstandsregelung umfaßt, sinnvoll ist, verfügt das Fahrzeug (1) über das frontseitige Abstandswarnsystem (7) als Teil der ansonsten hier nicht weiter interessierenden Tempomatregelung. Die Seitenabstandsregelung informiert den Fahrer, wann sie und damit wann eine automatische Spurhaltung durch automatische Lenkung des Fahrzeugs (1) situationsbedingt überhaupt aktiv werden kann, wobei eine entsprechende, nicht gezeigte Freigabeeinheit für die Regelung vorgesehen ist. Diese gibt beispielsweise die Aktivierung der Seitenabstandsregelung nicht frei, solange die Fahrzeuggeschwindigkeit unter 50 km/h liegt oder solange keine ausreichend zuverlässig detektierbaren Fahrspurmarkierungen vorhanden sind. Das Sperren der Abstandsregelung unterhalb des genannten Geschwindigkeitswertes bewirkt automatisch, daß die Abstandsregelung nur außerhalb geschlossener Ortschaften aktiv werden kann. Bei Aktivierung der Abstandsregelung kann dann der Fahrer entscheiden, ob sich die Regelung an der rechten oder linken Fahrspurmarkierung orientieren und um welchen Sollabstand geregelt werden soll. Auch bei gesperrt gehaltener Abstandsregelung bleibt die Einschlafwarnfunktion weiter aktiv, wobei das System einen lückenlosen und vom Fahrer nicht spürbaren Übergang zwischen Fahrer- und Systemaktivitäten gewährleistet. Wie bei einer intelligenten Tempomatregelung kann der Fahrer jederzeit die Abstandsregelungsfunktion abbrechen. Die Seitenabstandsregelung wird außerdem stets dann sofort deaktiviert, wenn eine Übernahme oder ein Eingriff des Fahrers in einen Lenkvorgang erfolgt, ein Überholvorgang eingeleitet wird oder die Bremsen betätigt werden.

Figur 3 veranschaulicht etwas genauer den schaltungstechnischen Aufbau des automatischen Spurhaltungssystems. Den beiden, in den Fahrzeugaußenspiegel integrierten Infrarot-Abtasteinrichtungen (2a, 2b) ist ein Rechner (8) als Auswerteeinheit des optischen Abtastsystems nachgeschaltet. Dieser überträgt u.a. Daten über die jeweiligen Abstände von seitlichen Fahrspurmarkierungen an eine angeschlossene Funktionsanzeigeeinheit, die den Fahrer über die Lage des Fahrzeugs relativ zu den Fahrspurmarkierungen sowie darüber informiert, ob die momentane Situation einen aktiven Betrieb der Abstandsregelung zur automatischen Spurhaltung zuläßt. Mit der Funktionsanzeigeeinheit (9) ist eine Regeleinrichtung (10) verbunden, die abstandsregelnde Eingriffe in das rechts daneben symbolisch angedeutete Fahrzeuglenksystem 14 in Abhängigkeit von der Differenz zwischen Ist- und Sollabstand des Fahrzeugs bezüglich der gewählten Fahrspurmarkierung vornimmt. Hierbei wird der Sollabstand vom Fahrer eingestellt, und der Istabstand wird vom Abtastsystem (2a, 2b, 8) erfaßt und über die Funktionsanzeigeeinheit (9) der Regeleinrichtung (10) zugeführt.

In Figur 4 ist die Anwendung beidseitig angebrachter mehrstrahliger Infrarot-Abtasteinrichtungen, die in die Außenspiegel eines Fahrzeugs (la) integriert sind, zur Rückraumüberwachung illustriert. Die optischen Abstasteinrichtungen bestehen wiederum jeweils aus mehreren nebeneinander angeordneten Infrarot-Sendeelementen und einem zugehörigen CCD-Array. Die Abtasteinrichtungen sind so aufgebaut und angeordnet, daß sie die in Figur 4 gezeigten Überwachungsbereiche (11a, llb) erfassen, die sich von schräg nach hinten außen bis entlang des Fahrzeugs nach hinten erstrecken und dabei die Breite einer angrenzenden Fahrspur erfassen, wie dies zur Rückraumüberwachung gefordert ist. Zusammen mit der nicht gezeigten, nachgeschalteten Auswerteeinheit erlauben die Infrarot-Abtasteinrichtungen wiederum die Bestimmung von Konturen mittels des Triangulationsprinzips, die Bestimmung von Entfernungen mittels Laufzeitmessung und die Messung von Kontrastdifferenzen. Damit ist das Abtastsystem in der Lage, Hindernisse starrer oder beweglicher Art im überwachten Bereich zu detektieren. In der in Figur 4 gezeigten Fahrsituation befindet sich das Fahrzeug (la) auf der mittleren Fahrspur einer dreispurigen Fahrbahn. Auf der linken Fahrspur befindet sich ein weiteres Fahrzeug (1b) bereits vollständig im Erfassungsbereich (11a) der linken Abtasteinrichtung, während ein auf der rechten Fahrspur befindliches Fahrzeug (1c) gerade noch geringfügig in den rechten Abtastbereich (11b) eingreift. Das gezeigte Beispiel veranschaulicht, wie dem Fahrer des mit dem optischen Abtastsystem ausgerüsteten Fahrzeugs (1a) andere Verkehrsteilnehmer, wie Kraftfahrzeuge, Radfahrer und Fußgänger, im seitlichen Rückraumbereich und insbesondere im sogenannten toten Winkel erfaßt und angezeigt werden können.

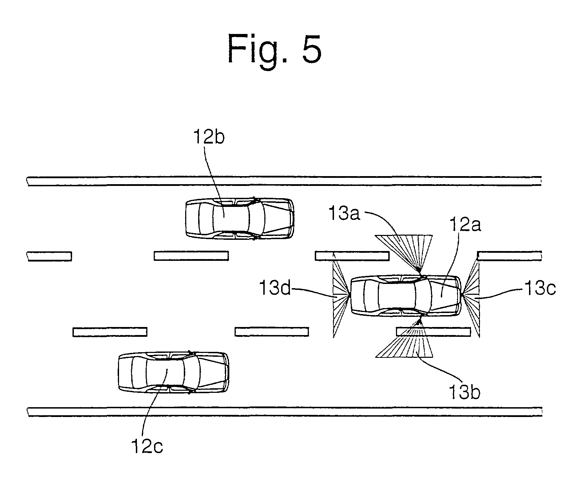

Einen weiteren Anwendungsfall bildet eine in Figur 5 illustrierte Umfeldüberwachung. Dazu sind beidseitig auf Höhe des Frontbereichs eines betreffenden Fahrzeugs (12a) mehrstrahlige Infrarot-Abtasteinrichtungen der oben beschriebenen Art mit jeweils mehreren Infrarot-Sendeelementen und zugehörigem CCD-Array so aufgebaut und positioniert, daß sie die gezeigten Überwachungsbereiche (13a, 13b) abtasten können, die sich im wesentlichen dreieckförmig erweiternd quer nach außen erstrecken. Zusätzlich sind für diese Umfeldüberwachung an der Fahrzeugfrontseite und an der Fahrzeugheckseite jeweils fahrzeugmittig zwei weitere Infrarot-Abtasteinrichtungen der beschriebenen Bauart so angeordnet, daß sie sich stark bis etwa zur Breite einer Fahrspur aufweitende, kurze Überwachungsbereiche (13c, 13d) besitzen. Die Umfelderkennung dient daher der Überwachung des unmittelbaren Fahrzeugumfelds. Vor allem bei Lastkraftwagen gibt es im Fahrzeugnahbereich große Zonen, die der Fahrer nicht einsehen kann, insbesondere direkt vor und hinter dem Fahrzeug sowie im seitlichen Nahbereich, speziell auf der rechten Fahrzeugseite. Weiter entfernte Objekte werden hierdurch nicht erfaßt, so daß beispielsweise in Figur 5, in der sich das mit dem Umfelderkennungssystem ausgerüstete Fahrzeug (12a) auf der mittleren Fahrspur einer dreispurigen Fahrbahn befindet, zwei dahinter auf den benachbarten Fahrspuren befindliche Fahrzeuge (12b, 12c) nicht in dessen Umfeldüberwachungsbereich liegen. Im übrigen erfolgt die Erkennung von Hindernissen im Umfeldbereich wiederum mit Hilfe der Fähigkeit der Infrarot-Abtastsysteme zur Konturen-, Entfernungs- und Kontrastdifferenzbestimmung.

Die obigen Beispiele veranschaulichen die unterschiedlichen Einsatzmöglichkeiten des oder der an einem erfindungsgemäßen Fahrzeug vorgesehenen, mehrstrahligen Infrarot-Abtastsysteme. Insbesondere können die seitlichen Abtasteinrichtungen, die beispielsweise im Außenspiegel integriert sind, sowohl zur Erfüllung einer Einschlafwarnfunktion als auch einer automatischen Spurhaltungsfunktion und des weiteren wenigstens unterstützend zur Erfüllung einer Rückraum- und/oder Umfeldüberwachungsfunktion dienen.

## Patentansprüche

1. Fahrzeug mit
- einer seitlich angebrachten optischen Abtasteinrichtung (2) mit mehreren nebeneinander angeordneten Infrarot-Sendeelementen (2c) und einem zugehörigen CCD-Array zur berührungslosen Abtastung der Fahrbahnoberfläche eines seitlichen Fahrbahnbereichs zwecks Erfassung einer Fahrspurbegrenzung und
- einer der Abtasteinrichtung nachgeschalteten Auswerteeinheit (8), die zur Laufzeitbestimmung, Kontrastbestimmung und Konturenerkennung aus den von der Abtasteinrichtung zugeführten Daten eingerichtet ist.

2. Fahrzeug nach Anspruch 1, weiter
**dadurch gekennzeichnet**, **daß**
die Auswerteeinheit (8) zur Bestimmung des Fahrzeugabstands (a) zu einer seitlichen Fahrspurbegrenzung, der Fahrzeugquergeschwindigkeit und der Art der Fahrspurbegrenzung eingerichtet ist und in Abhängigkeit von diesen Größen sowie der Fahrzeuglängsgeschwindigkeit ein Warnsignal bei einem drohenden Verlassen der Fahrspur durch das Fahrzeug (1) abgibt.

3. Fahrzeug nach Anspruch 2, weiter
**dadurch gekennzeichnet, daß**
- beidseitig jeweils eine optische Abtasteinrichtung (2a, 2b) mit nebeneinander angeordneten Infrarot-Sendeelementen und zugehörigem CCD-Array angeordnet ist und
- Einheiten zur Erzeugung einer akustischen Warnung an beiden Fahrzeuginnenraum-Seitenbereichen vorgesehen sind, wobei
- das Warnsignal von der Auswerteeinheit (8) seitenspezifisch zur Aktivierung derjenigen Warnungserzeugungseinheit abgegeben wird, auf deren Seite die Auswerteeinheit das drohende Verlassen der Fahrspur durch das Fahrzeug (1) erkannt hat.

4. Fahrzeug nach einem der Ansprüche 1 bis 3, weiter
**dadurch gekennzeichnet, daß**
- die Auswerteeinheit (8) zur Bestimmung des Fahrzeugabstands (a) von einer seitlichen Fahrspurbegrenzung eingerichtet ist und
- eine mit der Auswerteeinheit gekoppelte Regeleinrichtung (10) zur Regelung des Fahrzeugabstands von der seitlichen Fahrspurbegrenzung vorgesehen ist, wobei die Regeleinrichtung auf Benutzeranforderung aktivierbar und deaktivierbar ist.

5. Fahrzeug nach Anspruch 4, weiter
**gekennzeichnet durch** eine Abstandsregelungs-Freigabeeinheit, welche die Aktivierung der Abstandsregeleinrichtung nur bei Vorliegen vorbestimmter Fahrsituationen freigibt.

6. Fahrzeug nach Anspruch 4 oder 5, weiter
**dadurch gekennzeichnet, daß** die Abstandsregeleinrichtung bei erkanntem Fahrerlenkeingriff, erkanntem Beginn eines Überholvorgangs oder erkannter Bremsbetätigung deaktiviert wird.

7. Fahrzeug nach einem der Ansprüche 1 bis 6, weiter
**dadurch gekennzeichnet, daß**
beidseitig optische Abtasteinrichtungen mit nebeneinander angeordneten Infrarot-Sendeelementen und zugehörigem CCD-Array derart angeordnet sind, daß sie auch den seitlichen Rückraum und/oder das seitliche Umfeld des Fahrzeugs (1) abtasten.

## Claims

1. Vehicle with
- a side-positioned optical sensor device (2) with several infra-red sending elements (2c) positioned beside each other and an associated CCD array for the contact-free sensing of the road surface of a side road area for the purpose of registering lane demarcation and
- an evaluation unit (8) switched after the sensor device, which is equipped for running time determination, contrast determination and contour recognition from the data supplied by the sensor device.

2. Vehicle according to Claim 1, further
characterised in that
the evaluation unit (8) is equipped to determine the vehicle distance (a) from a side lane demarcation, the vehicle cross speed and the type of lane demarcation and, depending upon these parameters as well as the vehicle longitudinal speed, emits a warning signal when the vehicle (1) will imminently leave the lane.

3. Vehicle according to Claim 2, further
characterised in that
- on both sides respectively an optical sensor device (2a, 2b) is positioned with infra-red sending elements positioned beside one another and associated CCD array and
- units for generating an acoustic warning are provided on both vehicle inner area side areas, wherein
- the warning signal is emitted from the evaluation unit (8) side-specifically for the activation of that warning generation unit on whose side the evaluation unit has recognised the imminent leaving of the lane by the vehicle (1).

4. Vehicle according to one of the Claims 1 to 3, further
characterised in that
- the evaluation unit (8) is equipped for the determination of the vehicle distance (a) from a side lane demarcation and
- a control device (10) coupled to the evaluation unit for regulating the vehicle distance from the side lane demarcation is provided, wherein the control device can be activated and deactivated at the request of the user.

5. Vehicle according to Claim 4, further
characterised by
a distance control release unit, which releases the activation of the distance control device only when predetermined driving situations are present.

6. Vehicle according to Claim 4 or 5, further
characterised in that
the distance control device is deactivated if driver steering intervention, beginning of an overtaking process or brake activation are recognised.

7. Vehicle according to one of the Claims 1 to 6, further
characterised in that
on both sides optical sensor devices with infra-red sending elements positioned beside one another and associated CCD array are positioned in such a way that they also sense the side rear area and / or the side surrounding area of the vehicle (1).

## Revendications

1. Véhicule muni :
- d'un dispositif d'exploration optique (2), monté latéralement, contenant plusieurs éléments émetteurs d'infrarouges (2c) disposés les un à côté des autres, et une rangée d'éléments photosensibles à transfert de charges CCD afférente, pour explorer sans contact une zone latérale de la piste de roulage, dans le but d'appréhender une limitation de cette piste de roulage, et
- une unité d'évaluation (8) mise en circuit en aval du dispositif d'exploration, agencée pour déterminer le temps de transit, déterminer les contrastes et identifier les contours à partir des données amenées depuis le dispositif d'exploration.

2. Véhicule selon la revendication 1, caractérisé en outre en ce que l'unité d'évaluation (8) est agencée pour déterminer l'espacement de véhicule (a) par rapport à une limitation latérale de la trace de roulage, la vitesse transversale du véhicule et le genre de limitation de la trace de roulage, et, en fonction de ces grandeurs, ainsi que de la vitesse longitudinale du véhicule, fournit un signal d'avertissement en cas de menace d'abandon de la trace de roulage par le véhicule (1).

3. Véhicule selon la revendication 2, caractérisé en outre en ce que :
- sur chacun des deux côtés est disposé un dispositif d'exploration optique (2a, 2b), muni d'éléments émetteurs d'infrarouges disposés les uns à côté des autres et d'une rangée d'éléments photosensibles à transfert de charges CCD afférente, et
- des unités de génération d'un avertissement acoustique sont prévues sur les deux zones latérales d'habitacle du véhicule, où
- le signal d'avertissement est fourni par l'unité d'évaluation (8) de façon spécifique au côté concerné, pour activer l'unité de génération d'avertissement du côté auquel l'unité d'évaluation a identifié la menace d'abandon de la trace de roulage par le véhicule (1).

4. Véhicule selon l'une des revendications 1 à 3, caractérisé en outre en ce que :
- l'unité d'évaluation (8) est agencée pour déterminer l'espacement de véhicule (a) par rapport à une limitation latérale de la trace de roulage, et
- un dispositif de régulation (10), couplé à l'unité d'évaluation, est prévu pour réguler l'espacement du véhicule par rapport à la limitation latérale de la trace de roulage, le dispositif de régulation étant activable et désactivable sur demande de l'utilisateur.

5. Véhicule selon la revendication 4, caractérisé en outre par
une unité de libération de régulation d'espacement, qui libère l'activation du dispositif de régulation d'espacement uniquement en cas de présence de situations de roulage prédéterminées.

6. Véhicule selon la revendication 4 ou 5, caractérisé en outre en ce que le dispositif de régulation d'espacement est désactivé dans le cas où est identifiée une intervention du conducteur sur la direction, ou est identifié un début de processus de dépassement, ou est identifié un actionnement des freins.

7. Véhicule selon l'une des revendications 1 à 6, caractérisé en outre en ce que des dispositifs d'exploration optiques montés des deux côtés, ayant des éléments émetteurs d'infrarouges disposés les uns à côté des autres et une rangée d'éléments photosensibles à transfert de charges CCD afférente, sont disposés de manière à explorer également l'espace arrière latéral et/ou la zone environnante latérale du véhicule (1).
